# EUROPÄISCHE PATENTSCHRIFT

(11) **EP 0 964 803 B1**
(45) Veröffentlichungstag und Bekanntmachung des Hinweises auf die Patenterteilung: **23.10.2002**
(21) Anmeldenummer: 98966174.9
(22) Anmeldetag: 27.11.1998
(51) Int. Cl.: B60R 25/00

(54) **SENDEEINHEIT, INSBESONDERE FÜR EIN DIEBSTAHLSCHUTZSYSTEM EINES KRAFTFAHRZEUGS**
TRANSMITTER UNIT FOR AN ANTI-THEFT SYSTEM IN A MOTOR VEHICLE
UNITE EMETTRICE, NOTAMMENT POUR UN SYSTEME ANTIVOL D'UN VEHICULE A MOTEUR

(30) Priorität: 09.12.1997 DE 19754649
(43) Veröffentlichungstag der Anmeldung: 22.12.1999
(73) Patentinhaber: SIEMENS AKTIENGESELLSCHAFT, 80333 München (DE)
(72) Erfinder: GOLD, Peter, D-93161 Sinzing (DE)
(86) Internationale Anmeldenummer: DE9803499
(87) Internationale Veröffentlichungsnummer: WO99029542

(56) Entgegenhaltungen:
- WO-A-88/05950
- DE-A- 4 237 486
- DE-A- 4 335 773
- DE-A- 4 342 467
- DE-A- 19 542 441

## Beschreibung

Die Erfindung betrifft eine Sendeeinheit, insbesondere für ein Diebstahlschutzsystem eines Kraftfahrzeugs, mit der Signale ausgesendet werden.

Eine bekannte Sendeeinheit (DE 195 42 441 A1) weist zumindest ein Paar von Spulen auf, die dicht beieinander angeordnet sind. Die beiden Spulen werden von einer gemeinsamen Steuereinheit zum Senden von Signalen gesteuert. Diese Steuereinheit ist dicht bei den Spulen und zwischen den beiden Spulen angeordnet. Da fahrzeugspezifische Daten ausgesendet werden sollen, werden diese von einem zentralen Steuergerät jeweils jeder Steuereinheit zugeführt.

Die fahrzeugspezifischen Daten werden in binärer Form als Rechtecksignale über den Kabelbaum zu den einzelnen Steuereinheiten geführt. Die Rechtecksignale können sich störend auf andere elektrische Einrichtungen auswirken. Denn die Rechtecksignale weisen hochfrequente Oberschwingungen mit nicht zu vernachlässigender Amplitude auf. Infolge des Aussendens der fahrzeugspezifischen Daten können sich gerade im Kraftfahrzeug enorme EMV-Probleme ergeben. Bei der bekannten Sendeeinheit wird zudem für jedes Spulenpaar eine eigene Steuereinheit benötigt, da ansonsten Rechtecksignale mit noch größeren Amplituden zu den Spulen geführt werden müßten, damit auch ein genügend großes Feld mit ausreichender Reichweite erzeugt wird. Dies würde noch mehr Störungen verursachen.

Eine weitere bekannte Sendeeinheit (DE 43 42 467 A1) weist einen Generator auf, der eine sinusförmige Trägerschwingung erzeugt. Die Trägerschwingung wird für einen vorgebbaren Zeitraum einem Übertrager zugeführt, der die Schwingung von seiner Primärseite auf seine Sekundärseite transformiert. Eine Antenne ist unmittelbar mit dem Übertrager verbunden, wobei die Antennen jeweils ein elektromagnetisches Feld erzeugen, mit dessen Hilfe die Sinusschwingung ausgesendet wird.

Mit dieser bekannten Sendeeinheit wird keine modulierte Information ausgesendet. Außerdem kann nur ein eng um die einzige Antenne ausgebildetes, im wesentlichen magnetisches Feld erzeugt werden, das nur der Energieversorgung für eine Karte dient.

Der Erfindung liegt das Problem zugrunde, eine Sendeeinheit, insbesondere für ein Diebstahlschutzsystem eines Kraftfahrzeugs, die einfach aufgebaut ist und andere elektrische Einrichtungen nicht oder nur wenig stört.

Dieses Problem wird erfindungsgemäß durch die Merkmale von Patentanspruch 1 gelöst. Dabei weist die Sendeeinheit einen Generator auf, der eine sinusförmige Trägerschwingung erzeugt. Der Trägerschwingung wird eine Information (entspricht den fahrzeugspezifischen Daten) aufmoduliert. Ein zentraler Übertrager transformiert die modulierte Schwingung von seiner Primärseite auf seine Sekundärseite. Dabei wird die modulierte Schwingung bezüglich ihrer Amplitude verändert. An die Sekundärseite ist eine Umschalteinrichtung angeschlossen, mit der zwischen Antennengruppen umgeschaltet werden kann. Die Antennengruppen weisen mehrere Antennen auf, denen die modulierte Schwingung zugeführt wird. Durch die Antennen wird ein Wechselfeld erzeugt, durch das die fahrzeugspezifischen Daten moduliert ausgesendet werden.

Mit dieser Sendeeinheit werden den Antennen nur sinusförmige Signale zugeführt, die keine oder nur Ober Schwingungen mit geringer Amplitude aufweisen. Daher können die Signale in ihrer Leistung an die Antennen und ein durch diese erzeugtes elektromagnetisches Feld in seiner Reichweite angepaßt werden, ohne daß von den Signalen Störsignale infolge der Datenübertragung zu den Antennen ausgehen. Vorteilhafte Ausgestaltungen der Erfindung sind in den Unteransprüchen dargestellt. Es genügt, wenn der Generator ein einfacher Sinusoszillator ist, der die sinusförmige Trägerschwingung erzeugt. Wenn der Übertrager zusammen mit einem verstärker einen Aufwärtstransformator bildet, so wird die modulierte Schwingung bezüglich Spannung und Strom herauftransformiert, so daß der Generator eine Trägerschwingung mit relativ kleiner Amplituden erzeugen kann. Vorteilhafterweise sind die Antennen als Spulen ausgebildet, die einfach herzustellen und am Anbringungsort zu montieren sind.

Damit die Verluste zwischen dem Übertrager und den Antennen möglichst gering sind, werden verdrillte Zweidrahtleitungen verwendet. Ebenso können zweipolige, geschirmte Leitungen verwendet werden, von denen wenig Störstrahlung ausgeht.

Ein Ausführungsbeispiel der Erfindung wird im folgenden anhand der schematischen Zeichnungen näher erläutert. Es zeigen:
- Figur 1: ein Blockschaltbild der erfindungsgemäßen Sendeeinheit und
- Figur 2: ein Grundriß eines Kraftfahrzeugs, in dem die Sendeeinheit nach Figur 1 verwendet wird.

Eine erfindungsgemäße Sendeeinheit wird im folgenden beispielhaft anhand der Verwendung bei einem Diebstahlschutzsystem eines Kraftfahrzeugs erläutert. Andere, funktionsgleiche Verwendungen bei anderen Objekten sind ebenso möglich.

Ein Diebstahlschutzsystem, wie eine schlüssellose Zugangskontrolle zu einem Kraftfahrzeug, weist eine in dem Kraftfahrzeug befindliche Sendeeinheit und eine Empfangseinheit auf. Die Sendeeinheit sendet Signale aus, die fahrzeugspezifische Daten enthält. Falls die Daten von einem tragbaren Codeträger korrekt empfangen werden, so sendet dieser seinerseits verschlüsselte, benutzerspezifische Daten zu der Empfangseinheit im Kraftfahrzeug zurück. Dort werden die empfangenen Daten auf ihre Berechtigung geprüft. Bei Berechtigung können verschiedene Sicherheitsaggregate (Wegfahrsperre oder Türschlösser) oder sonstige elektrische Geräte (Lichtschalter, Elektromotoren, etc.) gesteuert werden.

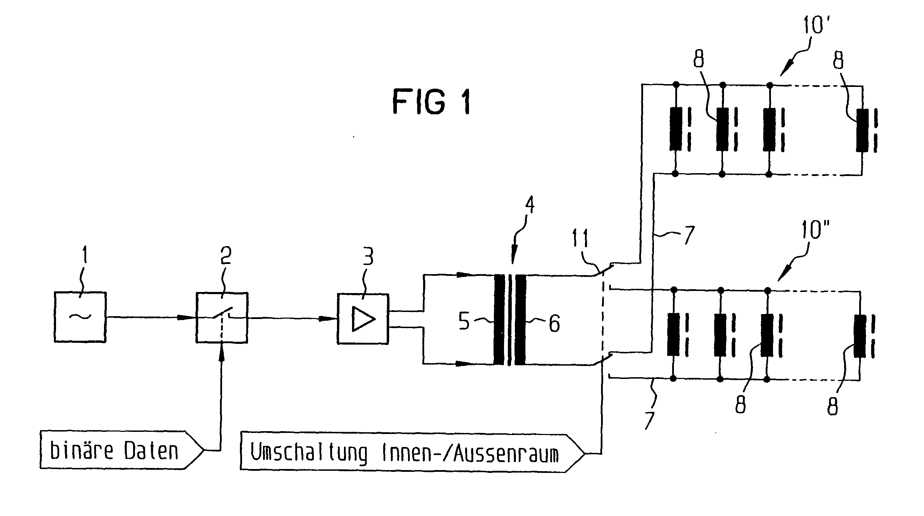

Die Sendeeinheit weist erfindungsgemäß einen Generator 1 (Figur 1) auf, der eine - vorzugsweise - sinusförmige Trägerschwingung erzeugt und einem Modulator 2 zuführt. Dem Modulator 2 werden außerdem fahrzeugspezifische Daten (niederfrequente modulierende Schwingung) zugeführt, die letztendlich ausgesendet werden sollen. In dem Modulator 2 werden der hochfrequenten Trägerschwingung die auszusendende Daten aufmoduliert. Somit entsteht eine modulierte Schwingung, die die Daten enthält.

Diese Daten sind für das Kraftfahrzeug spezifisch, damit nur ein zu dem Kraftfahrzeug zugehöriger Codeträger diese Daten empfangen kann und auf diese antworten kann.

Die modulierte Schwingung wird - falls ihre Amplitude noch nicht groß genug ist - einem Verstärker 3 (hier eine Linear - endstufe) zugeführt, durch die die modulierte Schwingung möglichst unverzerrt verstärkt wird. Die verstärkte modulierte Schwingung wird einem Übertrager 4 zugeführt, der die modulierte Schwingung von seiner Primärseite auf seine Sekundärseite transformiert. Dabei wird die Amplitude der modulierten Schwingung für das Aussenden angepaßt.

Der Übertrager 4 ist in dem Ausführungsbeispiel nach Figur 1 als Aufwärtstransformator mit einer Primärwicklung 5 und einer Sekundärwicklung 6 ausgebildet. Durch ihn wird die modulierte Schwingung von der Primärwicklung 5 auf die Sekundärwicklung 6 übertragen und dabei bezüglich Spannung und Strom verstärkt.

Die transformierte Schwingung wird über Leitungen 7, die im Kraftfahrzeug verlegt sind, zu einer oder mehrere Antennen 8 geführt. Die Antennen 8 erzeugen infolge der modulierte Schwingung ein elektromagnetisches Wechselfeld, wodurch die fahrzeugspezifischen Daten drahtlos ausgesendet und zu dem Codeträger übertragen werden.

Die Antennen 8 sind vorzugsweise als Spulen mit oder ohne Ferritkern ausgebildet. Jede Antenne 8 erzeugt ein Wechselfeld, das in seiner Reichweite begrenzt ist. Üblicherweise beträgt die Reichweite etwa ein bis zwei Metern. Wenn sich innerhalb der Reichweite des Magnetfeldes eine Spule des Codeträgers befindet, so wird in dieser Spule eine Wechselspannung induziert, die proportional zu der modulierten Schwingung ist. Aus der Wechselspannung werden die fahrzeugspezifischen Daten durch Demodulation erhalten.

Die Antennen 8 sind elektrisch parallel zueinander verschaltet. Somit wird gewährleistet, daß alle Antennen 8 mit etwa gleicher Leistung gesteuert werden, wenn von den Leitungsverlusten auf der Leitung 7 zu den Antennen 8 abgesehen wird.

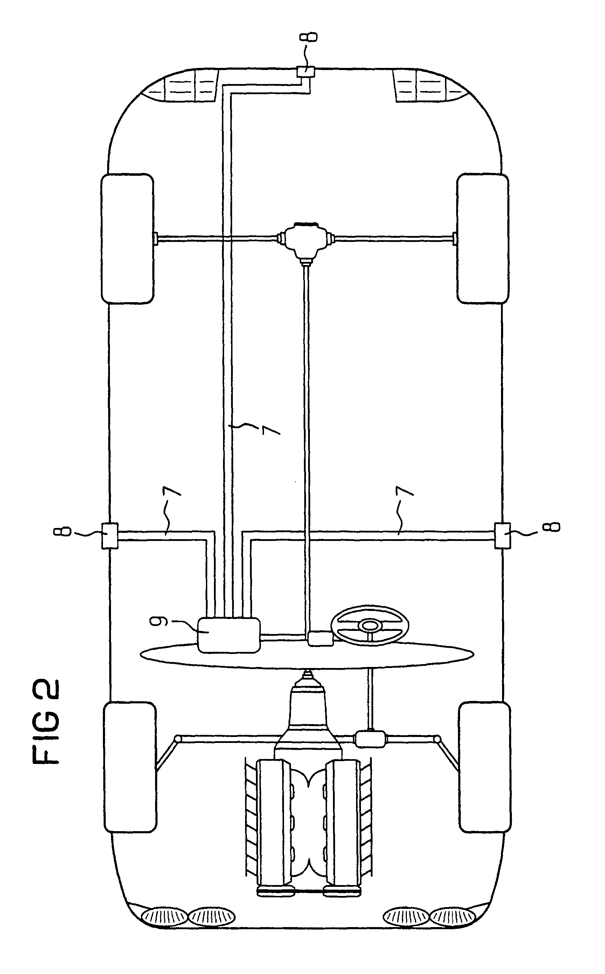

Die Antennen 8 können gemäß Figur 2 an allen Türgriffen und am Kofferraumgriff angeordnet sein. Die Antennen 8 können auch an jedem geeigneten Ort im Fahrzeug verteilt angeordnet sein. Der Generator 1, der Modulator 2, der Verstärker 3 und der Übertrager 4 sind zentral in einem Gehäuse (auch als Steuergerät 9 bezeichnet) angeordnet.

Da über die Leitungen 7 zu den Antennen 8 nur sinusförmige Signale übertragen werden und diese Signale keine Oberschwingungen oder nur Oberschwingungen mit sehr geringer Amplitude aufweisen, werden andere elektrische Einrichtungen im Kraftfahrzeug durch Störstrahlung infolge der Übertragung auf den Leitungen 7 nicht oder nur sehr wenig gestört.

Vorteilhaft ist es, wenn die Leitungen 7 zu den Antennen 8 als verdrillte Zweidrahtleitungen oder als zweipolige, geschirmte Leitungen ausgebildet sind. Die Leitungen 7 sind sehr störungsarm, d.h. von ihnen geht nur eine geringe Störstrahlung aus. Außerdem sind sie sehr verlustarm, so daß die modulierte Schwingung auf dem Weg zu einer Antenne 8 nur wenig in seiner Leistung gedämpft wird.

Es können auch mehrere Gruppen 10 von parallel angeordneten Antennen 8 mit der Sekundärwicklung 6 des Übertragers 4 verbunden sein. Durch einen Umschalter 11 kann dann zwischen den verschiedenen Gruppen 10 umgeschaltet werden. Wenn beispielsweise die eine Gruppe 10' von Antennen 8 im Innenraum des Kraftfahrzeugs angeordnet ist, so breitet sich ihr Wechselfeld vorzugsweise im Innenraum aus. Wenn genügend viele Antennen 8 vorhanden sind, die gut verteilt im Innenraum angeordnet sind, so wird der gesamte Innenraum mit dem Feld durchsetzt. Der Codeträger kann sich dann an jeder beliebigen Stelle im Innenraum befinden und kann sicher das von der Sendeeinheit ausgesendete Signal empfangen.

Die andere Gruppe 10" von parallel geschalteten Antennen 8 kann auf der Außenseite des Kraftfahrzeugs oder zumindest so im Kraftfahrzeug angeordnet sein, daß ihr Wechselfeld die unmittelbare Umgebung um das Kraftfahrzeug (als Außenraum bezeichnet) durchdringt. Somit kann mit diesen Antennen 8 ein Signal zu einem Codeträger außerhalb des Kraftfahrzeugs gesendet werden. Die Lage und der Ort des Codeträgers sind dann von untergeordneter Bedeutung, solange sich der Codeträger innerhalb des Wechselfeldes befindet und die Antennen 8 gut verteilt im oder am Kraftfahrzeug angeordnet sind.

Auf diese Weise wird der Codeträger je nach Bedarf im Innenoder Außenraum sicher angesprochen, d.h. er empfängt sicher die von der Sendeeinheit ausgesendeten Signale.

Als Übertrager 4 können zwei Luftspulen (d.h. Primär- und Sekundärwicklung) dienen. Es kann auch ein Transformator mit Eisenkern verwendet werden. Ebenso sind Transformatoren mit Anzapfungen möglich, wobei die Antennen 8 mit Teilwindungen der Sekundärwicklung 6 verbunden sind.

Für die Erfindung ist es unwesentlich, wie der Übertrager 4 ausgestaltet ist. Wesentlich ist, daß der Übertrager 4 die modulierte Schwingung auf die Sekundärseite mit genügend großer Amplitude überträgt. Der Übertrager 4 ist dabei zentral angeordnet. Für die Verwendung im Kraftfahrzeug genügt es, wenn nur ein einziger Übertrager 4 vorhanden ist. Es können aber auch mehrere Übertrager 4 vorhanden sein, die dann auch phasenverschoben zueinander angesteuert werden können.

Der Linearverstärker ist nicht unbedingt notwendig, solange der Generator 1 genügend große Signale zur Verfügung stellt oder der Übertrager 4 eine genügend große Verstärkerwirkung aufweist.

Die erfindungsgemäße Sendeeinheit ist einfach und zuverlässig aufgebaut. Mit ihr ist eine sichere Innen- und Außenraumerkennung möglich, d.h. Codeträger werden je nach Wahl im Außen- oder Innenraum angesprochen. Mit dem Übertrager 4 kann eine fast beliebige Zahl von Antennen 8 verbunden werden. Mit dieser Sendeeinheit ist man auch nicht an die Ausgestaltung des Kraftfahrzeugs (oder eines anderen Objekts) gebunden, in dem die Sendeeinheit verwendet wird.

Die Antennen 8 werden vorzugsweise als Spulen realisiert. Sie können daher sehr klein ausgebildet und fast beliebig oft in dem Objekt angebracht werden. Sie beeinflussen demzufolge kaum die geometrische Form oder das Design der Kraftfahrzeugkarosserie.

Mit dieser Sendeeinheit müssen die ausgesendeten Signale in Bezug auf jeweils zwei Antennen 8 nicht in ihren Phasen und Sendeleistungen zueinander eingestellt werden, um - wie beim Stand der Technik - ein möglichst dreidimensionales Überlagerungsfeld zu erzeugen. Wenn genügend Antennen 8 vorhanden und in unterschiedlichen Lagen angeordnet sind, so werden allein schon durch die geometrische Verteilung und Anordnung der Antennen 8 Feldkomponenten in allen Raumrichtungen erhalten, die dann eine genügend große Spannung in der Spule des Codeträgers induzieren können.

Die erfindungsgemäße Sendeeinheit ist abgleichsfrei und kann ohne anfängliche Einstellungen in jedem Objekt verwendet werden. Da keine Schwingkreise verwendet werden, sind auch keine Einschwingzeiten vorhanden. Somit lassen sich wesentlich höhere Übertragungsraten (Baudraten) für das Übertragen der fahrzeugspezifischen Daten realisieren. Der Sendevorgang ist infolgedessen auch schnell abgeschlossen.

Als Generator 1 wird vorzugsweise ein Sinusgenerator (Ringzähler mit Filter) verwendet, der Signale (Trägerschwingung) bei einer Frequenz von etwa 125 kHz erzeugt. Die Trägerschwingung kann im Modulator 2 zu 100% moduliert werden, wenn eine Amplitudenmodulation mit einem binären Signal vorgenommen wird. Es können auch andere Modulationsarten verwendet werden, um die Daten hochfrequent zu übertragen.

Als Linearendstufe kann ein nicht dargestellter Differenzverstärker mit angeschlossener Vollbrücke dienen. Nach der Verstärkung wird die modulierte Schwingung dem Übertrager 4 zugeführt. Der Übertrager 4 liefert dann die zur Felderzeugung mit den Antennen 8 notwendigen Spannungen auf seiner Sekundärseite.

Da die Antenne 8 bei der erfindungsgemäßen Sendeeinheit kein Teil eines Schwingkreises ist, sind resonanzbedingte Verstimmungen und Phasenlagen ausgeschlossen, die sich bei einem Schwingkreis nachteilig bemerkbar machen würden. Da Generator 1, Modulator 2 und Übertrager 4 im wesentlichen mit sinusförmigen Spannungen und Strömen arbeiten, werden dadurch keine störenden Oberschwingungen erzeugt.

Die Sendeeinheit wird nur kurzzeitig benötigt, und zwar nur dann, wenn ein Signal ausgesendet werden soll. Aus diesem Grunde spielt eine evtl. vorhandene hohe Verlustleistung des Verstärkers 3 keine Rolle, da dieser nur kurzzeitig benötigt wird. Üblicherweise ist die Sendeeinheit kürzer als eine Sekunde im Betrieb, und zwar dann, wenn ein Benutzer in sein Kraftfahrzeug einsteigen (Ent- oder Verriegeln) oder dieses starten (Lösen der Wegfahrsperre) möchte.

Wenn die Antennen 8 als Spulen ausgebildet sind, so können sie auch vorteilhafterweise zum Empfang von Signalen verwendet werden, die jeweils von dem Codeträger ausgesendet werden (bidirektionale Kommunikation bei der gleichen Sendefrequenz). Wenn zumindest eine Antenne 8 Signale empfängt, so werden diese dann an der Sekundärwicklung 6 abgegriffen und über die nicht dargestellte, zentrale Empfangseinheit einer Auswerteeinheit zugeführt, wo die benutzerspezifischen Daten mit gespeicherten, erwarteten Daten verglichen werden.

## Patentansprüche

1. Sendeeinheit, insbesondere für ein Diebstahlschutzsystem eines Kraftfahrzeugs, mit:
- einem eine sinusförmige Trägerschwingung erzeugenden Generator (1),
- einem Modulator (2), der der Trägerschwingung eine auszusendende Information aufmoduliert,
- einern Übertrager (4), der die modulierte Schwingung von seiner Primärseite auf seine Sekundärseite transformiert,
- mehreren Antennengruppen (10), die mehrere parallel zweinander angeordnete Antennen (8) aufweisen, die jeweils ein elektromagnetisches Feld erzeugen, mit dessen Hilfe die Information ausgesendet wird, und mit
- einer Umschalteinrichtung (11), die zwischen der Sekundärseite des übertragers (4) und den Antennengruppen angeordnet ist, und die eine zwischen den verschiedenen Antennengruppen umschaltbare elektrische Verbindung herstellt.

2. Sendeeinheit nach Anspruch 1, **dadurch gekennzeichnet, daß** die Antennen (8) verteilt am und/oder im Kraftfahrzeug angeordnet sind.

3. Sendeeinheit nach Anspruch 1, **dadurch gekennzeichnet, daß** der Generator (1) eine Sinusoszillator ist.

4. Sendeeinheit nach Anspruch 1, **dadurch gekennzeichnet, daß** der Übertrager 4 zusammen mit einem vorgeschalteten Verstärker (3) ein Aufwärtstransformator bildet, der die modulierte Schwingung bezüglich Spannung und Strom herauftransformiert.

5. Sendeeinheit nach Anspruch 1, **dadurch gekennzeichnet, daß** die Antennen (8) über verdrillte Zweidrahtleitungen oder über eine zweipolige, geschirmte Leitung mit der Sekundärseite elektrisch verbunden sind.

## Claims

1. Transmitter unit, in particular for an anti-theft system in a vehicle, with:
- a generator (1) generating a sinusoidal carrier oscillation,
- a modulator (2), which modulates data to be transmitted up to the carrier oscillation,
- a transformer (4), which transfers the modulated oscillation from its primary side to its secondary side,
- a plurality of antenna sets (10), which have a plurality of parallel antennas (8), which each generate an electromagnetic field, which is used to transmit the data, and with
- a switching device (11), located between the secondary side of the transformer (4) and the antenna sets, which provides an electrical connection which can be switched between the various antenna sets.

2. Transmitter unit according to Claim 1, **characterised in that** the antennas (8) are distributed on and/or in the vehicle.

3. Transmitter unit according to Claim 1, **characterised in that** the generator (1) is a sinusoidal oscillator.

4. Transmitter unit according to Claim 1, **characterised in that** the transformer (4), together with an upstream amplifier (3), forms a step-up transformer, which steps up the modulated oscillation with regard to voltage and current.

5. Transmitter unit according to Claim 1, **characterised in that** the antennas (8) are connected electrically to the secondary side via twisted pair wires or via a bipolar shielded wire.

## Revendications

1. Unité émettrice, notamment pour un dispositif antivol d'un véhicule automobile, comprenant
- une génératrice (1) produisant une oscillation porteuse sinusoïdale.
- un modulateur (2), qui module une information à émettre par-dessus l'oscillation porteuse,
- un convertisseur (4), qui transforme l'oscillation modulée de son côté primaire vers son côté secondaire,
- plusieurs groupes d'antennes (10). qui comportent plusieurs antennes (8) disposées en parallèle entre elles qui produisent chacune un champ électromagnétique respectif à l'aide duquel l'information est émise et
- un dispositif de commutation (11) qui est disposé entre le côté secondaire du convertisseur (4) et les groupes d'antennes et qui réalise une liaison électrique commutable entre les différents groupes d'antennes.

2. Unité émettrice suivant la revendication 1, **caractérisée en ce que** les antennes (8) sont disposées d'une manière répartie sur et/ou dans le véhicule automobile.

3. Unité émettrice suivant la revendication 1, **caractérisée en ce que** la génératrice (1) est un oscillateur sinusoïdal.

4. Unité émettrice suivant la revendication 1, **caractérisée en ce que** le convertisseur (4) forme, en commun avec un amplificateur (3) connecté en amont, un transformateur élévateur de tension qui élève l'oscillation modulée en ce qui concerne la tension et le courant.

5. Unité émettrice suivant la revendication 1, **caractérisée en ce que** les antennes (8) sont reliées électriquement au côté secondaire par l'Intermédiaire de lignes bifilaires torsadées ou par l'intermédiaire d'une ligne blindée bipolaire.
